## Europäisches Patentamt

## European Patent Office

## Office européen des brevets

(19)

(11) Veröffentlichungsnummer: **0 049 904**
**B1**

(12)

# EUROPÄISCHE PATENTSCHRIFT

(45) Veröffentlichungstag der Patentschrift:
27.03.85

(21) Anmeldenummer: 81108287.4

(22) Anmeldetag: 13.10.81

(51) Int. Cl.⁴: **E 05 B  67/38**, B 62 H  5/00,
B 62 J  11/00

(54) **Halterung für ein Langbügelschloss.**

(30) Priorität: 13.10.80  DE 3038657

(43) Veröffentlichungstag der Anmeldung:
21.04.82 Patentblatt 82/16

(45) Bekanntmachung des Hinweises auf die Patenterteilung:
27.03.85 Patentblatt 85/13

(84) Benannte Vertragsstaaten:
AT BE CH DE FR GB IT LI NL SE

(56) Entgegenhaltungen:
CH - A - 223 688
DE - A - 2 818 943
DE - U - 1 677 506
US - A - 2 706 901

(73) Patentinhaber: Firma Aug. Winkhaus,
August-Winkhaus-Strasse 78, D-4404 Telgte (DE)

(72) Erfinder: Kortenbrede, Ludger, Delsener Heide 14,
D-4404 Teltge (DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)

## Beschreibung

Die Erfindung betrifft eine Halterung für ein Langbügelschloß nach dem Oberbegriff des Anspruchs 1.

Eine solche Halterung ist aus der DE-A-2 818 943 bekannt.

Bei der bekannten Halterung ist die Schloßaufnahme von einem radial im jeweiligen Fahrradrahmenrohr abstehenden Rohrstück gebildet, welches mit seinem einen Ende am Fahrradrahmenrohr anliegt und durch eine gesonderte Schelle am Rahmenrohr befestigt ist. Das andere Ende des Rohrstücks ist offen und mit einem Bajonettverschlußschlitz in seiner an das offene Ende angrenzenden Mantelwand versehen. Das Langbügelschloß wird mit seinem stangenartig ausgebildeten Schloßkörper in das offene Ende des Rohrstücks eingeschoben und kann dann durch Eingriff des einen Langbügelschenkels in dem bajonettverschlußartigen Schlitz gesichert werden.

Bei dieser bekannten Ausführungsform ist zu beanstanden, daß das Langbügelschloß relativ weit von dem tragenden Fahrradrahmenrohr auslädt, daß ein Pendeln des Langbügelschlosses in der Aufnahme, insbesondere nach längerem Gebrauch, nicht mit Sicherheit zu vermeiden ist, und daß die Halterung insgesamt mehrteilig ausgebildet ist, was sich auf die Herstellung, die Lagerhaltung und die Montage am Fahrradrahmen ungünstig auswirkt.

Der Erfindung liegt die Aufgabe zugrunde, eine Halterung der im Oberbegriff bezeichneten Art anzugeben, welche leichter hergestellt werden kann, an dem jeweiligen Fahrradrahmen leichter befestigt werden kann und bedienungsfreundlich in dem Sinn ist, daß das Langbügelschloß mit einem einfachen Handgriff eingesetzt und entnommen werden kann. Weiterhin soll ein sicherer Sitz des Langbügelschlosses gewährleistet werden.

Zur Lösung dieser Aufgabe werden die Maßnahmen nach dem kennzeichnenden Teil des Anspruches 1 vorgeschlagen.

Die einstückige Herstellung der Befestigungsteile (Klemmschelle) und der Schloßaufnahme erleichtern die Massenproduktion, die Lagerhaltung, den Versand und die Montage der Halterung am Fahrradrahmenteil. Die Herstellung aus Kunststoff macht die Halterung berührungsfreundlicher.

Der klemmende Eingriff des Klemmstückes an den Langbügelschenkeln in Verbindung mit der Aufnahme eines Teils des Langbügelschlosses in dem Aufnahmeschacht sorgt für eine unbewegliche Festlegung des Langbügelschlosses am Fahrradrahmen. Besonders günstig ist dabei, daß das Klemmstück zwischen die Langbügelschenkel eingreifend an den Innenseiten der Langbügelschenkel anliegt. Dadurch steht ohne großen Raumbedarf außerhalb des Langbügelschlosses ein Klemmstück mit ausreichend »Fleisch« für eine sichere Klemmung zur Verfügung. Der Querschenkel sichert das Langbügelschloß gegen Verlust des Klemmsitzes auf dem Klemmstück, und der Aufnahmeschacht sorgt für strikte Einhaltung der Parallelität des Langbügelschlosses zum jeweiligen Fahrradrahmenteil.

Aus der US-A 2 706 901 ist eine Halterung für ein Langbügelschloß bekannt, die aus Blech hergestellt ist. Diese Halterung sieht eine betriebsmäßig unlösbare Verbindung des Langbügelschlosses mit dem Fahrradrahmen vor, wobei das Langbügelschloß durch die Halterung schwenkbar gelagert ist, so daß es durch eine Schwenkbewegung zu der Sperrstellung und der Deponiestellung verlagert werden kann. Der Herstellungsaufwand für diese Halterung ist verhältnismäßig groß. Verletzungsgefährdende Teile sind kaum zu vermeiden. Ein Klemmsitz, wie beim Gegenstand des Patents, in Form eines zwischen die Langbügelschenkel einfassenden, an deren einander zugekehrten Innenseiten anliegenden Klemmstücks ist nicht vorgesehen.

Die erfindungsgemäße Halterung kann in der Weise weitergebildet werden, daß der Aufnahmeschacht als eine Klemmtasche mit in Einführungsrichtung hintereinanderliegender Einweiseschräge und ggf. einer Klemmzone ausgeführt ist.

Wenn hier von Langbügelschlössern gesprochen wird, so sind dabei insbesondere Schlösser des Vorhängeschloßtyps mit verlängertem U-Bügel gemeint, bei denen mindestens ein Schenkel nach Lösen eines Sperrmechanismus aus dem Schloßkörper herausgezogen wird und hierauf der Schloßkörper gegenüber dem U-Bügel um den einen Langbügelschenkel verdreht werden kann. Gemeint sind aber auch solche Langbügelschlösser, bei denen beide U-Bügelschenkel aus dem Schloßkörper gelöst werden können. In beiden Fällen erfolgt die Sicherung dadurch, daß der U-Bügel unter Umfassung der beiden Gabelschenkel, etwa der Hinterradgabel, durch das Rad hindurchgesteckt und dann mit dem Schloßkörper wieder zusammengesteckt, verriegelt und gesichert wird. Es ist auch möglich, dabei innerhalb des U-Bügels einen stationären Sicherungsteil, z. B. eine Sprosse eines Kellerfensters miteinzuschließen.

Die Figuren erläutern die Erfindung anhand von Ausführungsbeispielen. Es stellt dar

Fig. 1 eine Seitenansicht eines Sattelrohrs eines Fahrradrahmens mit einer Halterung für ein Langbügelschloß und einem in diese Halterung eingesetzten Langbügelschloß;

Fig. 2 eine Ansicht in Pfeilrichtung II der Fig. 1 auf die Halterung in einer Zwischenstellung des Langbügelschlosses während seines Einsetzens in die Halterung;

Fig. 3 eine Ansicht der Halterung in Pfeilrichtung III der Fig. 1;

Fig. 4 eine Draufsicht auf die Halterung;

Fig. 5 einen Schnitt nach Linie V-V der Fig. 3;

Fig. 6 einen Schnitt nach Linie VI-VI der Fig. 5;

Fig. 7 eine Rückansicht der Halterung in Pfeilrichtung VII der Fig. 5.

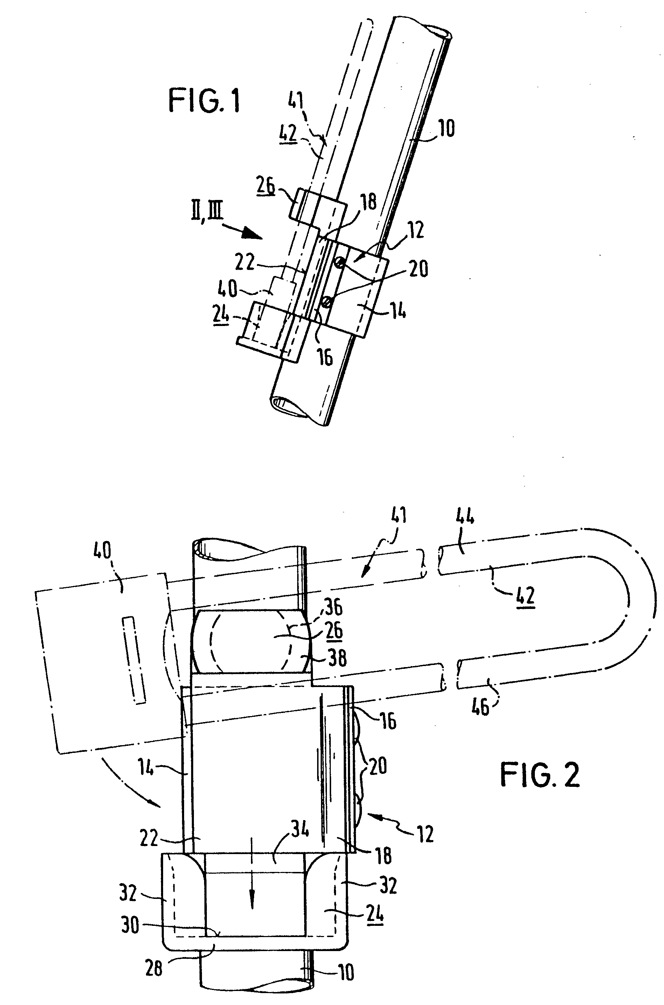

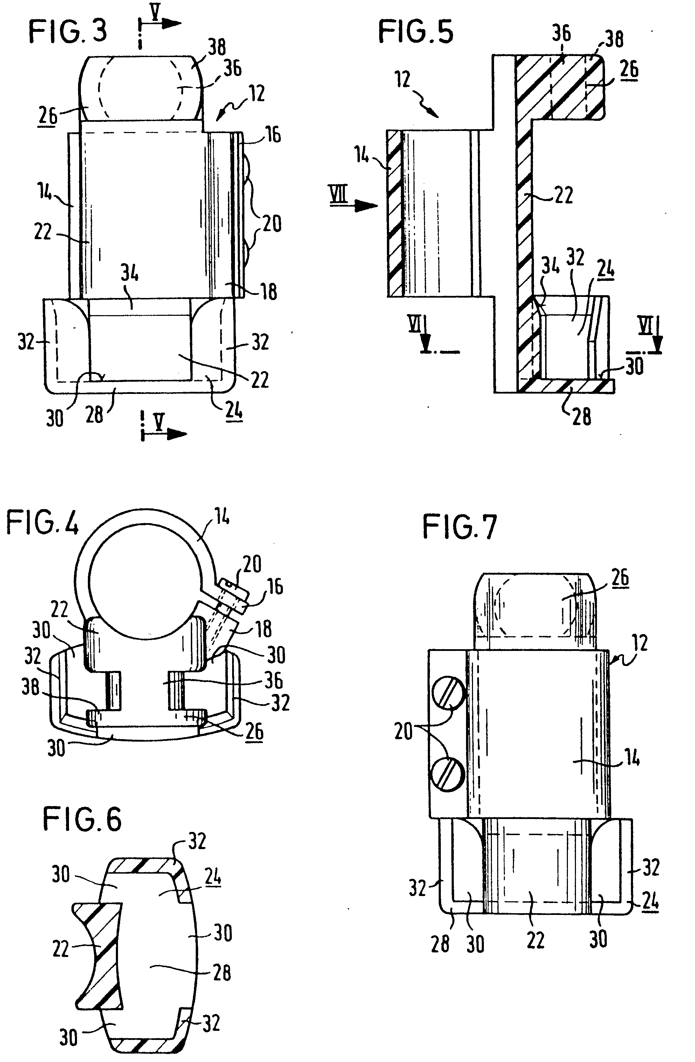

In Fig. 1 ist das Sattelrohr eines Fahrradrahmens mit 10 bezeichnet. An diesem Sattelrohr 10 ist eine ganz allgemein mit 12 bezeichnete Halterung angebracht, welche im einzelnen in Fig. 3 bis 7 dargestellt ist. Diese Halterung 12 umfaßt eine Klemmschelle 14 mit Schließstegen 16 und 18, welche durch selbstschneidende Schrauben 20 zusammengeklemmt werden können. An der Klemmschelle 14 ist eine Aufnahme 22 einstückig angebracht. Diese Aufnahme 22 trägt an ihrem in den Fig. 3, 5 und 7 unteren Ende einen Aufnahmeschacht 24 in Form einer Aufnahmetasche und an ihrem oberen Ende ein T-Stück 26. Die Aufnahmetasche 24 besitzt einen Boden 28 und durch Öffnungen 30 unterbrochene Seitenwände 32. Die Unterbrechungen 30 dienen einmal der spritzgußtechnischen Herstellung und andererseits der elastischen Deformierbarkeit der Seitenwände 32 zum Zwecke der Erzeugung eines festen Klemmsitzes des gegenüber dem Innenumriß der Aufnahmetasche 24 leicht überdimensionierten Schloßkörpers 40.

An der Aufnahmetasche 24 ist eine Einweiseschräge 34 angebracht, welche das Einschieben des Schloßkörpers 40 in die Aufnahmetasche 24 erleichtern soll.

Das T-Stück 26 umfaßt ein Klemmstück 36 und einen Querschenkel 38. Der Querschenkel 38 ist dabei länger als dem lichten Abstand der Bügelschenkel 44, 46 des Langbügels 42 entspricht. Der Durchmesser des Klemmstücks 36 quer zur Längsachse der Klemmschelle 14 ist ein klein wenig größer, als dem lichten Abstand der Bügelschenkel 44, 46 des Langbügels 42 entspricht, so daß er bei Parallelstellung des Langbügels 42 zu der Klemmschellenachse an den einander zugekehrten Flächen der Bügelschenkel 44, 46 klemmend anliegt.

In Fig. 2 erkennt man die Anbringung des Langbügelschlosses 41 an der Halterung 12 in einem Zwischenstadium. Das Langbügelschloß 41 weist einen Schloßkörper 40 und einen Langbügel 42 mit zwei Bügelschenkeln 44 und 46 auf, von denen der eine drehbar und axial verschiebbar in dem Schloßkörper 40 geführt ist und der andere in ein Sackloch des Schloßkörpers 40 eingeführt und darin verriegelt werden kann. Gemäß Fig. 2 wurde der Langbügel 42 in seiner annähernd quer zur Längsachse der Klemmschelle 14 eingestellten Lage über den Querschenkel 38 hinweggeschoben und kann nunmehr, wie durch den Drehpfeil in Fig. 2 angedeutet, zunächst verdreht werden, bis die Bügelschenkel 44, 46 parallel zur Klemmschellenachse und die Langbügelebene tangential und symmetrisch zur Klemmschellenachse stehen. Hierauf kann der Schloßkörper 40 in die Aufnahmetasche 24 eingeschoben werden in Richtung des abwärts gerichteten Schiebepfeils gemäß Fig. 2. Das Langbügelschloß 41 ist dann in der Halterung 12 gut gesichert, einmal durch die Klemmwirkung der Aufnahmetasche 24 auf den Schloßkörper 40 und insbesondere durch die Reibung der Bügelschenkel 44, 46 an dem Klemmstück 36 des T-Stücks 26. Es ist also auch bei harten Stößen kaum zu erwarten, daß sich der Schloßkörper 40 aus der Aufnahmetasche 24 löst, selbst wenn er sich aber lösen sollte, so ist er immer noch durch das T-Stück 26 gesichert, solange, bis er sich zusätzlich um annähernd 90° gedreht hat.

## Patentansprüche

1. Halterung für ein Langbügelschloß (41) in Parallelstellung an einem Fahrradrahmenteil (10) mit einer Schloßaufnahme (22), die mittels einer Klemmschelle (14) an dem Fahrradrahmenteil (10) befestigbar ist, dadurch gekennzeichnet, daß die aus Kunststoff einstückig mit der Klemmschelle (14) hergestellte Schloßaufnahme (22) ein zwischen die Langbügelschenkel (44, 46) einfassendes Klemmstück (36) mit einem den Klemmsitz zwischen den Langbügelschenkeln (44, 46) und dem Klemmstück (36) sichernden Querschenkel (38) und einen das Langbügelschloß in der Parallelstellung zur Klemmschellenachse haltenden Aufnahmeschacht (24) aufweist.

2. Halterung nach Anspruch 1, dadurch gekennzeichnet, daß der Aufnahmeschacht (24) eine Klemmtasche ist mit in Einführungsrichtung hintereinanderliegender Einweiseschräge (34) und Klemmzone (32).

## Claims

1. Holding device for a long-shackled lock (41) in parallel position on a cycle frame part (10), with a lock receiver which is securable by means of a clamp strap (14) on the cycle frame part (10), characterised in that the lock receiver (22) produced from synthetic plastics material in one piece with the clamp strap (14) comprises a clamp piece (36) engaging between the legs (44, 46) of the long shackle with a transverse leg (38) securing the clamping seating between the long shackle legs (44, 46) and the clamp piece (36) and a receiver shaft (24) holding the long-shackled lock in the position parallel to the axis of the clamp strap.

2. Holding device according to claim 1, characterised in that the receiver shaft (24) is a clamp socket having guide-in slope (34) and clamping zone (32) lying one behind the other in the direction of introduction.

## Revendications

1. Dispositif de fixation pour cadenas (41) à anses longues, en position parallèle à une partie (10) de cadre de bicyclette, comportant un logement (22) de serrure qui peut être fixé au moyen d'un collier de serrage (14) sur ladite partie (10), caractérisé en ce que le logement (22) de serrure, réalisé en matière plastique d'une pièce avec le collier de serrage (14), comporte une pièce de serrage (36) insérée entre les branches (44, 46) d'anse longue, avec une branche transversale (38) assurant une assise de serrage entre les branches (44, 46) et la pièce de serrage (36), et une cage de réception (24) maintenant la serrure de cadenas dans une position parallèle à l'axe du collier de serrage.

2. Dispositif selon la revendication 1, caractérisé en ce que la cage de réception (24) est une poche de serrage avec, disposés l'un derrière l'autre dans la direction d'introduction, un biseau approprié (34) et une zone de serrage (32).

0 049 904

FIG.1

FIG. 2

0 049 904

FIG. 3

FIG. 5

FIG. 4

FIG. 7

FIG. 6

7